# EUROPEAN PATENT APPLICATION

(11) **EP 4 418 552 A1**
(43) Date of publication of application: **21.08.2024**
(21) Application number: 22880927.3
(22) Date of filing: 07.10.2022
(51) Int. Cl.: H04B 7/06, H04B 7/08, H04W 72/20

(54) **TERMINAL, WIRELESS COMMUNICATION METHOD, AND BASE STATION**

(30) Priority: 11.10.2021 JP 2021166799
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/037536
(87) International publication number: WO 2023/063232

(57) **Abstract**

A terminal according to an aspect of the present disclosure includes: a receiving section that receives a plurality of downlink control information formats, each of the plurality of downlink control information formats including a transmission configuration indication (TCI) state indication; and a control section that applies a TCI state indicated by one downlink control information format of the plurality of downlink control information formats, at a specific timing after reception of the plurality of downlink control information formats. An aspect of the present disclosure allows a TCI state to be appropriately determined.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is under study that a transmission configuration indication (TCI) state for one or more channels/signals is indicated by one piece of downlink control information.

However, it is not clear how a UE determines a TCI state in a case of receiving a plurality of pieces of DCI related to TCI states. Unless operations for such a plurality of pieces of DCI are clear, the communication throughput may be reduced.

In view of this, an object of the present disclosure is to provide a terminal, a radio communication method, and a base station that appropriately determine a TCI state.

### Solution to Problem

A terminal according to an aspect of the present disclosure includes: a receiving section that receives a plurality of downlink control information formats, each of the plurality of downlink control information formats including a transmission configuration indication (TCI) state indication; and a control section that applies a TCI state indicated by one downlink control information format of the plurality of downlink control information formats, at a specific timing after reception of the plurality of downlink control information formats. Advantageous Effects of Invention

An aspect of the present disclosure allows a TCI state to be appropriately determined.

### Brief Description of Drawings

[FIG. 1] FIGS. 1A and 1B each show an example of a unified TCI state.
[FIG. 2] FIG. 2 shows an example of a BAT.
[FIG. 3] FIGS. 3A and 3B each show an example of a first embodiment.
[FIG. 4] FIG. 4 shows an example of a second embodiment.
[FIG. 5] FIG. 5 shows an example of a third embodiment.
[FIG. 6] FIGS. 6A and 6B each show another example of the third embodiment.
[FIG. 7] FIG. 7 shows an example of a fourth embodiment.
[FIG. 8] FIG. 8 shows another example of the fourth embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/Common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a channel/RS for UL and the number M (≥1) of TCI states (DL TCI states) applied to a channel/RS for DL may be defined. At least one of N and M may be notified/configured/indicated for the UE through higher layer signaling/physical layer signaling.

In the present disclosure, when N = M = X (X is any integer) is described, this may mean that X (corresponding to X TRPs) TCI states (joint TCI states) common to UL and DL are notified/configured/indicated for the UE. When N = X (X is any integer) and M = Y (Y is any integer and Y may be Y = X) are described, this may mean that X (corresponding to X TRPs) UL TCI states and Y (corresponding to Y TRPs) DL TCI states (in other words, separate TCI states) are notified/configured/indicated for the UE.

For example, when N = M = 1 is described, this may mean that one TCI state common to UL and DL for a single TRP is notified/configured/indicated for the UE (a joint TCI state for a single TRP) .

For example, when N = 1 and M = 1 are described, this may mean that one UL TCI state and one DL TCI state for a single TRP are separately notified/configured/indicated for the UE (separate TCI states for a single TRP).

For example, when N = M = 2 is described, this may mean that a plurality of (two) TCI states common to UL and DL for a plurality of (two) TRPs are notified/configured/indicated for the UE (joint TCI states for a plurality of TRPs).

For example, when N = 2 and M = 2 are described, this may mean that a plurality of (two) UL TCI states and a plurality of (two) DL TCI states for a plurality of (two) TRPs are notified/configured/indicated for the UE (separate TCI states for a plurality of TRPs).

Note that, in the example described above, although a case is described in which the value of each of N and M is 1 or 2, the value of each of N and M may be 3 or greater and N may be different from M.

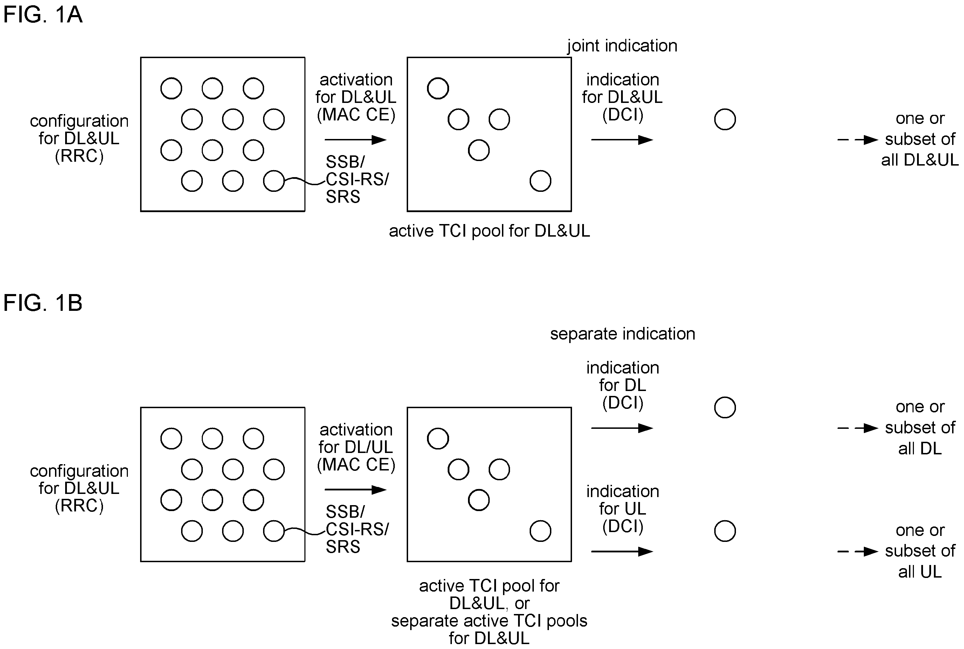

In an example in FIG. 1A, an RRC parameter (information element) configures a plurality of TCI states for both DL and UL. A MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state to be applied to both UL and DL or may be two respective TCI states to be applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In an example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

A common TCI framework may include separate TCI states for DL and UL.

It is under study that, with respect to M = N = 1 for a separate DL/UL TCI in the unified TCI framework in Rel. 17, one instance of a beam indication using DCI format 1_1/1_2 (with/without DL assignment) follow at least one of the following Beam Indication 1 to Beam Indication 3.
[Beam Indication 1] One TCI field codepoint expresses a pair of a DL TCI state and a UL TCI state. If DCI indicates such a TCI field codepoint, the UE applies the corresponding DL TCI state and UL TCI state.
[Beam Indication 2] One TCI field codepoint expresses only a DL TCI state. If DCI indicates such a TCI field codepoint, the UE applies the corresponding DL TCI state while maintaining a UL TCI state.
[Beam Indication 3] One TCI field codepoint expresses only a UL TCI state. If DCI indicates such a TCI field codepoint, the UE applies the corresponding UL TCI state while maintaining a DL TCI state.

In the present disclosure, a TCI state pool, a TCI state list, a unified TCI state pool, a joint TCI, a joint TCI state pool, a separate TCI state pool, a separate DL/UL TCI state pool, a DL TCI state pool, a UL TCI state pool, a separate DL TCI state pool, a separate UL TCI state pool, and a separate UL TCI may be interchangeably interpreted.

### (Beam Indication DCI for Unified TCI)

It is under study that, with respect to a beam indication using a unified TCI in Rel. 17, a UE supports DCI format 1_1/1_2 (beam indication DCI) without any DL assignment. An ACK/NACK scheme for the beam indication may use a scheme similar to an ACK/NACK scheme for SPS PDSCH release using HARQ-ACK codebooks of type 1 and type 2.

In response to successful reception of the beam indication DCI, the UE may report an ACK. In response to unsuccessful reception of the beam indication DCI, the UE may report a NACK.

With respect to the type 1 HARQ-ACK codebook, a position of the ACK information in the HARQ-ACK codebook may be determined based on a virtual PDSCH indicated by a TDRA field in the beam indication DCI, based on a time domain allocation list configured for PDSCHs. With respect to the type 2 HARQ-ACK codebook, a position of the ACK information in the HARQ-ACK codebook may be determined in accordance with a rule the same as a rule for SPS release.

The ACK may be reported in a PUCCH after k slots from the last of the PDCCH reception. Here, k may be indicated by a PDSCH-to-HARQ feedback timing indication field in the DCI format, or, if no PDSCH-to-HARQ feedback timing indication field is present in the DCI, k may be provided by dl-DataToUL-ACK or dl-DataToUL-ACK-ForDCIFormat1-2-r16.

When DCI is used for a beam indication, a CS-RNTI may be used for CRC scrambling for the DCI and the DCI fields may have the following values.
- RV = all '1'
- MCS = all '1'
- NDI = 0
- all '0' for FDRA type 0, or all '1' for FDRA type 1, or all '0' for dynamicSwitch

The following DCI fields may be used in a manner similar to Rel. 16.
- Identifier for DCI formats
- Carrier indicator
- Bandwidth part indicator
- TDRA
- Downlink assignment index (if configured)
- TPC command for scheduled PUCCH
- PUCCH resource indicator
- PDSCH-to-HARQ _feedback timing indicator (if present)

The rest of the DCI fields and codepoints that are not used may be reserved in Rel. 17.

The UE may report whether to support TCI update by DCI format 1_1/1_2. For the UE that supports TCI update by DCI format 1_1/1_2, it may be necessary to support TCI update by DCI format 1_1/1_2 without any DL assignment.

### (HARQ-ACK for Multi-TRP)

As a Hybrid Automatic Repeat reQuest ACKnowledgement (HARQ-ACK) feedback for multi-PDSCH, a separate HARQ-ACK feedback and a joint HARQ-ACK feedback are under study. In the present disclosure, "separate" may be interchangeably interpreted as "independent."

The separate HARQ-ACK feedback (which may be referred to as separate feedback or separate HARQ-ACK) corresponds to feedbacks that a UE transmits HARQ-ACKs for respective TRPs with using separate uplink control channel (Physical Uplink Control Channel (PUCCH))/uplink shared channel (Physical Uplink Shared Channel (PUSCH)) resources. Such a plurality of PUCCH/PUSCH resources may overlap with each other (may be transmitted simultaneously) or may not overlap with each other (for example, may be multiplexed by TDM/FDM) .

Using the separate HARQ-ACK allows HARQ-ACK transmission independent for each TRP. Even when backhaul delay between TRPs is large (for example, the TRPs are connected by a non ideal backhaul), delay in the HARQ is not increased.

The joint HARQ-ACK feedback (which may be referred to as joint feedback, joint HARQ-ACK, or the like) corresponds to a feedback that a UE transmits HARQ-ACKs for a plurality of TRPs together using the same PUCCH/PUSCH resource.

Using the joint HARQ-ACK allows the resource overhead to be reduced since one PUCCH/PUSCH transmission is sufficient for the joint HARQ-ACK. When backhaul delay between TRPs is small (for example, the TRPs are connected by an ideal backhaul), a HARQ-ACK transmitted to one TRP is possible to be sent to the other TRP in low latency.

In Rel-16 NR, a UE may be configured with a feedback mode by a higher layer parameter (which may be referred to as "ackNackFeedbackMode", "ackNackFeedbackMode-r16", ACKNACK feedback mode, or the like) indicating which of the joint feedback or separate feedback the feedback mode to be used in one slot is.

One or a plurality of pieces of DCI that schedule multi-PDSCH may include a field for PUCCH resource indicator (PRI). The PRI corresponds to information specifying a resource for transmission of an HARQ-ACK corresponding to a PDSCH. The PRI may be referred to as an ACK/NACK resource indicator (ARI).

The UE may judge, based on the PRI, a PUCCH resource for transmission of an HARQ-ACK corresponding to the multi-PDSCH described above.

### (HARQ-ACK Codebook)

In NR, a UE may transmit an HARQ-ACK feedback using one PUCCH resource, in a unit of HARQ-ACK codebook including one or more acknowledgement information (for example, Hybrid Automatic Repeat reQuest ACKnowledgement (HARQ-ACK)) bits. The HARQ-ACK bits may be referred to as HARQ-ACK information, HARQ-ACK information bits, or the like.

Here, the HARQ-ACK codebook may include bits for HARQ-ACK in a unit of at least one of time domain (for example, slot), frequency domain (for example, component carrier (CC)), spatial domain (for example, layer), transport block (TB), and code block group (CBG) constituting the TB. The HARQ-ACK codebook may be simply referred to as a codebook.

Note that the number (size) and the like of bits included in the HARQ-ACK codebook may be determined semi-statically or dynamically. The HARQ-ACK codebook having the size determined semi-statically is also referred to as a semi-static HARQ-ACK codebook, a type 1 HARQ-ACK codebook, or the like. The HARQ-ACK codebook having the size determined dynamically is also referred to as a dynamic HARQ-ACK codebook, a type 2 HARQ-ACK codebook, or the like.

Which of the type 1 HARQ-ACK codebook or type 2 HARQ-ACK codebook is to be used may be configured for the UE by using a higher layer parameter (for example, pdsch-HARQ-ACK-Codebook).

In a case of the type 1 HARQ-ACK codebook, the UE may, in a certain range (for example, a range configured based on the higher layer parameter), feed back HARQ-ACK bits for PDSCH candidates (or PDSCH occasions) corresponding to the range, regardless of whether a PDSCH is scheduled.

The range may be defined based on at least one of a period (for example, a set of a specific number of occasions for reception of PDSCHs being candidates, or a specific number of PDCCH monitoring occasions), the number of CCs to be configured or activated for the UE, the number of TBs (the number of layers or rank), the number of CBGs per one TB, and presence/absence of application of spatial bundling. The range is also referred to as an HARQ-ACK window, an HARQ-ACK bundling window, an HARQ-ACK feedback window, or the like.

With the type 1 HARQ-ACK codebook, as long as in the range, the UE ensures bits for a PDSCH in the codebook, even when the PDSCH for the UE is not scheduled. When judging that the PDSCH is not actually scheduled, the UE can feed back the bits as NACK bits.

In the case of the type 1 HARQ-ACK codebook, regardless of reception of DCI/PDSCH, the size of the HARQ-ACK codebook is definite, so that the DCI need not include any DAI. The HARQ-ACK bits (the corresponding pieces of DCI/PDSCHs) in the type 1 HARQ-ACK codebook for one TRP may be associated with indices. The indices may be in ascending order of frequency (for example, serving cell (CC) indices). The indices may be in ascending order of time (for example, PDCCH monitoring occasions), with respect to the same frequency.

On the other hand, in a case of the type 2 HARQ-ACK codebook, the UE may, in the range described above, feed back HARQ-ACK bits for a PDSCH scheduled.

Specifically, the UE may determine the number of bits in the type 2 HARQ-ACK codebook on the basis of a field (for example, DL assignment index (Downlink Assignment Indicator (Index) (DAI)) field) in DCI. The DAI field may include a counter DAI (C-DAI) and a total DAI (T-DAI).

The C-DAI may indicate a counter value for downlink transmission (PDSCH, data, TB) scheduled in a certain period. For example, a C-DAI in DCI that schedules data in the period may indicate a number having counted first in the frequency domain (for example, CC) in the period and then in the time domain. For example, a C-DAI may correspond to a value obtained by counting PDSCH reception or semi-persistent scheduling (SPS) releases in ascending order of serving cell indices and then in ascending order of PDCCH monitoring occasions, with respect to one or more pieces of DCI included in the period.

In other words, the C-DAI may mean a cumulative number of pairs of {serving cell, PDCCH monitoring occasion} corresponding to each data up to a current serving cell and current PDCCH monitoring occasion.

A T-DAI may indicate a total value (total number) for data scheduled in a certain period. For example, a T-DAI in DCI that schedules data in a certain time unit (for example, PDCCH monitoring occasion) in the period may indicate a total number of pieces of data having been scheduled until the time unit (also referred to as point, timing, or the like) in the period.

In other words, the T-DAI may mean a total number of pairs of {serving cell, PDCCH monitoring occasion} corresponding to each data up to a current PDCCH monitoring occasion, the total number being a value updated every PDCCH monitoring occasion.

In the case of type 2 HARQ-ACK codebook, DCI include a DAI, so that the understanding of the size of the HARQ-ACK codebook can be in common between the base station and the UE. The HARQ-ACK bits (the corresponding pieces of DCI/PDSCHs) in the type 2 HARQ-ACK codebook for one TRP may be associated with indices. The indices may be in ascending order of time (for example, PDCCH monitoring occasions). The indices may be in ascending order of frequency (for example, serving cell (CC) indices), with respect to the same time.

In Rel-16 NR having been studied thus far, CORESETs with different CORESET pool indices are used for scheduling of different respective PDSCHs (multi-DCI based multi-TRP).

Thus, for Rel-16 NR, a scheme is defined that, when a UE is configured with a first CORESET and a second CORESET as described above and is configured with the separate feedback (is configured with "ackNackFeedbackMode-r16" = "separate"), the UE separately performs generation/reporting of HARQ-ACK information related to the first CORESET and generation/reporting of HARQ-ACK information related to the second CORESET, regarding the type 1 and type 2 HARQ-ACK codebooks.

Note that, in the present disclosure, "first TRP", "TRP 1", "first CORESET", and "CORESET that is not provided with any CORESET pool index or that is provided with CORESET pool index value = 0" may be interchangeably interpreted. The "first CORESET" may mean one or a plurality of the first CORESETs.

Note that, in the present disclosure, "second TRP", "TRP 2", "second CORESET", and "CORESET provided with CORESET pool index value = 1" may be interchangeably interpreted. The "second CORESET" may mean one or a plurality of the second CORESETs.

Meanwhile, two CORESETs (also referred to as "two linked CORESETs for PDCCH repetition" in the present disclosure) related to two linked SS sets as described above are used for repetition transmission of DCI with the same payload. In other words, the two linked CORESETs may be used to schedule the same one PDSCH.

### (PUCCH Resource Determination for HARQ-ACK Information)

With respect to a PUCCH with HARQ-ACK information, a UE determines a set of PUCCH resources for the number of HARQ-ACK information bits, and then determines a PUCCH resource. PUCCH resource determination is based on a PUCCH resource indicator field in the last DCI format of a plurality of specific DCI formats if any. The plurality of specific DCI formats are a plurality of DCI formats that have a value of PDSCH-to-HARQ_feedback timing indicator field or a value of dl-DataToUL-ACK, dl-DataToUL-ACK-r16, or d1-DataToUL-ACKForDCIFormat1-2, indicating the same slot for PUCCH transmission, that are detected by a UE, and that are for transmission of the corresponding HARQ-ACK information in the PUCCH. In the PUCCH resource determination, the plurality of specific DCI formats detected are first indexed in ascending order of serving cell indices for the same PDCCH monitoring occasion and then indexed in ascending order of PDCCH monitoring occasion indices. In indexing for a plurality of DCI formats in one serving cell with respect to the same PDCCH monitoring occasion index, if, in an active DL BWP of one serving cell, the UE is not provided with any CORESET pool index or is provided with a CORESET pool index with a value 0 for one or more first CORESETs, and the UE is provided with a CORESET pool index with a value 1 for one or more second CORESETs, and, for an active UL BWP, the UE is with ackNackFeedbackMode=joint, then a DCI format detected from PDCCH reception in the first CORESETs is indexed prior to a DCI format detected from PDCCH reception in the second CORESETs.

### (Beam Application Time (BAT))

For a DCI-based beam indication in Rel. 17, regarding an application time (BAT) of a beam/unified TCI state indication, the following Study 1 and Study 2 are under study.

### [Study 1]

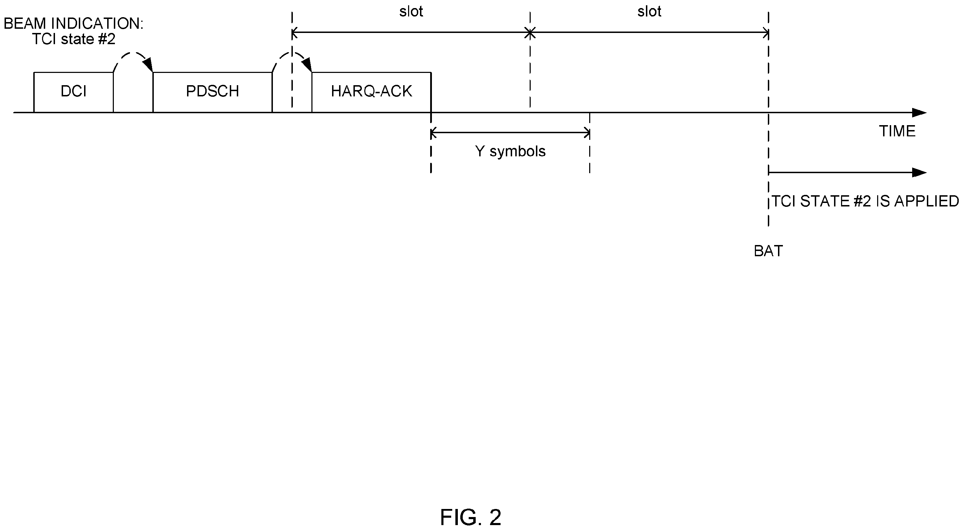

It is under study that the first slot to which an indicated TCI is to be applied is after at least Y symbols from the last symbol of an acknowledgement (ACK) for a joint or separate DL/UL beam indication (FIG. 2). It is under study that the first slot to which an indicated TCI is to be applied is after at least Y symbols from the last symbol of an ACK/negative acknowledgement (NACK) for a joint or separate DL/UL beam indication. Y symbols may be configured by a base station on the basis of a UE capability. The UE capability may be reported in symbol units.

According to Study 1, a BAT is determined based on Y symbols. When SCSs are different between a plurality of CCs, values of Y symbols are also different, thus BATs are different between the plurality of CCs.

### [Study 2]

For a case of CA, the application time of the beam indication may conform to any one of the following Choice 1 to Choice 3.
[Choice 1] Both of the first slot and Y symbols are determined in a carrier with the minimum SCS among one or more carriers to which the beam indication is to be applied.
[Choice 2] Both of the first slot and Y symbols are determined in a carrier with the minimum SCS among one or more carriers to which the beam indication is to be applied and UL carriers that carry the ACK of the beam indication.
[Choice 3] Both of the first slot and Y symbols are determined in a UL carrier that carries the ACK of the beam indication.

As a CC simultaneous beam update function in Rel. 17, it is under study that the beam is made common to those between a plurality of CCs in CA. According to Study 2, BATs between a plurality of CCs are in common.

However, it is not clear how a UE determines a TCI state on the basis of a plurality of pieces of DCI in a case of receiving the plurality of pieces of DCI related to TCI states. Unless operations for such a plurality of pieces of DCI are clear, the communication throughput may be reduced.

In view of this, the inventors of the present invention came up with the idea of a method of appropriately determining a TCI state on the basis of a plurality of pieces of DCI.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a TCI state, a common TCI state, a unified TCI state, a TCI state applicable for DL and UL, a TCI state applied to a plurality (plurality of types) of channels/RSs, a TCI state applicable for a plurality of types of channels/RSs, a joint TCI state for DL and UL, a TCI state for UL and DL for a joint TCI indication, a separate TCI state for DL/UL, a UL only TCI state for a separate TCI indication, and a DL only TCI state for a separate TCI indication may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a common TCI state pool for UL, a common TCI state pool for DL, a common TCI state pool configured/activated by RRC / MAC CE, and TCI state information may be interchangeably interpreted.

In the present disclosure, a channel/RS to which a unified TCI is applied may be a PDCCH/PDSCH/HARQ-ACK information/PUCCH/PUSCH/CSI-RS/SRS.

In the present disclosure, a beam indication, beam indication DCI, TCI (state) indication DCI, and DCI with a TCI indication (field) may be interchangeably interpreted.

### (Radio Communication Method)

In embodiments, a unified TCI may be simply referred to as a TCI state. In other words, a TCI state in each embodiment may be applied to one or more types of channels/RSs.

In each embodiment, HARQ-ACK information corresponding to DCI, an ACK corresponding to DCI, a UL transmission scheduled/triggered by DCI, HARQ-ACK information corresponding to a PDSCH scheduled by DCI, and a UL transmission at a UL transmission timing indicated by DCI may be interchangeably interpreted. In each embodiment, a UL transmission, HARQ-ACK information, an ACK, and a PUCCH/PUSCH/SRS may be interchangeably interpreted.

In each embodiment, a DCI format (specific DCI) with a TCI field may be a DCI format with a TCI field present (configured), out of specified DCI formats. In each embodiment, a DCI format without any TCI field may be a DCI format except a specified DCI format with a TCI field, may include DCI format 1_0, or may include a specified DCI format without any TCI field. The specified DCI format may include DCI format 1_1/1_2, may include a group common DCI format (for example, DCI format 2_x), or may include a UL grant DCI format (for example, DCI format 0_x). The specified DCI format may be at least one of a DCI format with DL assignment and a DCI format without any DL assignment.

In each embodiment, a DCI format with a TCI field, a DCI format indicating a TCI state, beam indication DCI, and specific DCI may be interchangeably interpreted. In each embodiment, target DCI may be one or more pieces of specific DCI.

In each embodiment, at and after a specific timing based on target DCI indicating a TCI state, a UE may apply the TCI state. The specific timing may be a timing after Y symbols from reception of the target DCI, may be after Y symbols from the last symbol of reception of the target DCI, may be the first slot after at least Y symbols from the last symbol of reception of the target DCI, may be the first slot after at least Y symbols from the last symbol of transmission of an ACK for the target DCI, may be the first slot after at least Y symbols from the last symbol of transmission of an ACK/NACK for the target DCI, or may be the first slot after at least Y symbols from the last symbol of a UL transmission for the target DCI.

### <First Embodiment>

This embodiment relates to HARQ-ACK information for a plurality of pieces of DCI (specific DCI/target DCI) indicating beams/TCI states.

In an existing specification, a UE reports an HARQ-ACK for a PDSCH triggered by DCI format 1_1/1_2. However, when the UE reports a NACK, it is not possible for a base station to identify whether the NACK is caused by a failure in decoding of the PDSCH or caused by a failure in decoding of a PDCCH (DCI). Thus, introduction of an ACK scheme for TCI update DCI is preferable.

All UE operations related to DCI can be considered as an ACK for the DCI. If the DCI triggers an aperiodic SRS transmission and the UE transmits the SRS, the base station is possible to assume that the DCI is received, regardless of whether the UE reports an ACK or reports a NACK. Furthermore, a plurality of times of TCI update signaling need not be triggered for a plurality of DL slots corresponding to an HARQ codebook. Thus, one bit indicating whether the UE receives one time of TCI update signaling for a plurality of corresponding DL slots may be added in the HARQ codebook.

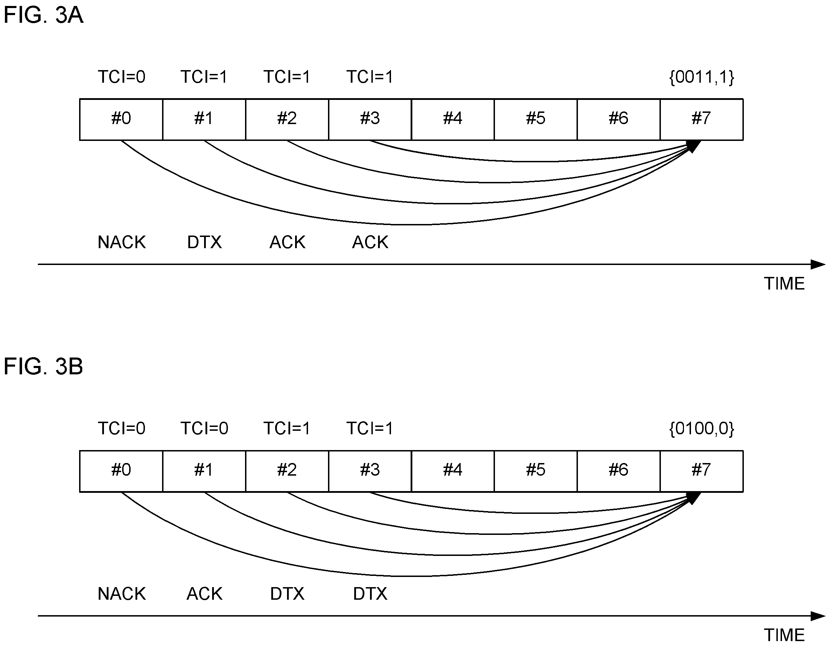

In an example of each of FIGS. 3A and 3B, a UE transmits, in slot #7, an HARQ-ACK codebook for DL in slots #0 to #3. In the example of FIG. 3A, the UE, from a state of TCI = 0, fails in decoding DCI indicating TCI = 0 in slot #0 (NACK), fails in detecting DCI indicating TCI = 1 in slot #1 (discontinuous transmission (DTX, no response/no transmission)), succeeds in decoding DCI indicating TCI = 1 in slot #2 (ACK), and succeeds in decoding DCI indicating TCI = 1 in slot #3 (ACK). In this case, the UE determines an HARQ-ACK codebook {0011} corresponding to each of slots #0 to #3. Since the TCI in each of slots #0 to #3 is updated from 0 to 1, the UE reports, in slot #7, an HARQ-ACK codebook {00111} obtained by adding a bit {1} indicating the update of the TCI in each of slots #0 to #3 to the HARQ-ACK codebook. In the example of FIG. 3B, the UE, from a state of TCI = 0, fails in decoding DCI indicating TCI = 0 in slot #0 (NACK), succeeds in decoding DCI indicating TCI = 0 in slot #1 (ACK), fails in detecting DCI indicating TCI = 1 in slot #2 (DTX), and fails in detecting DCI indicating TCI = 1 in slot #3 (DTX). In this case, the UE determines an HARQ-ACK codebook {0100} corresponding to each of slots #0 to #3. Since the TCI in each of slots #0 to #3 is not updated, the UE reports, in slot #7, an HARQ-ACK codebook {01000} obtained by adding a bit {0} indicating no update of the TCI in each of slots #0 to #3 to the HARQ-ACK codebook.

It may be defined that the UE assumes that the base station updates a TCI up to one time in a plurality of DL slots corresponding to an HARQ-ACK codebook. One additional bit indicating whether the UE receives TCI update in the plurality of DL slots corresponding to the HARQ-ACK codebook may be introduced in the HARQ codebook. If DCI for update of a TCI triggers an aperiodic SRS, the additional bit need not be reported. In view of this, whether the UE transmits the SRS may be used for determination of an HARQ-ACK for the DCI.

In Study 1 described above, the ACK/NACK for the joint or separate DL/UL beam indication may be an ACK carried on a PUCCH/PUSCH based on beam indication DCI, or may be a UL channel/UL signal (for example, PUSCH/PUCCH/SRS) based on the beam indication DCI. The base station may judge an ACK/NACK for beam indication DCI on the basis of a UL channel/UL signal based on the beam indication DCI.

According to this embodiment, the base station is possible to appropriately recognize an ACK/NACK for beam indication DCI.

### <Second Embodiment>

This embodiment relates to a case that a plurality of pieces of DCI indicate beams/TCI states.

When a UE transmits, on one PUSCH/PUCCH, a plurality of ACKs for a plurality of PDSCHs based on a plurality of pieces of specific DCI together, it is not clear that the UE follows the TCI indication of the DCI corresponding to which ACK among the plurality of ACKs. The UE may select/determine one (target DCI) of the plurality of pieces of specific DCI, taking account of at least one of a large/small relation of time domain resources/indices, a large/small relation of frequency domain resources/indices, and a large/small relation of TRP/CORESET pool indices.

In accordance with a specific parameter, the UE may assign indices for a plurality of pieces of DCI (beam indication DCI), and select/determine DCI of the last in the indices (a TCI state in the DCI may be used in indication/update). The specific parameter may be at least one of the following parameters corresponding to each DCI.
- bit position in semi-static (type 1)/dynamic (type 2) HARQ-ACK codebook
- index for determination of the last DCI for determination of PUCCH resource
- time (for example, PDCCH monitoring occasion)
- frequency (for example, serving cell index)
- TRP (for example, TRP ID/CORESET pool index)

In indexing, a priority order for a plurality of specific parameters may be defined. The priority order may be any one of the following.
- time, frequency, TRP
- time, TRP, frequency
- frequency, time, TRP
- frequency, TRP, time
- TRP, time, frequency
- TRP, frequency, time

When the priority order is an order of a first parameter, a second parameter, and a third parameter, indices are assigned for a plurality of pieces of DCI in ascending order or descending order of the first parameter. A plurality of pieces of DCI with the same value for the first parameter are assigned with indices in ascending order or descending order of the second parameter. A plurality of pieces of DCI with the same value for the first parameter and the same value for the second parameter are assigned with indices in ascending order or descending order of the third parameter. For example, a plurality of pieces of DCI are assigned with indices in ascending order of frequency (for example, serving cell indices), a plurality of pieces of DCI with the same value for frequency are assigned with indices in ascending order of time (for example, PDCCH monitoring occasion indices), and a plurality of pieces of DCI with the same value for frequency and the same value for time are assigned with indices in ascending order of TRP (for example, CORESET pool indices).

In accordance with a specific parameter, the UE may assign indices to a plurality of PDSCHs each based on a respective one of a plurality of pieces of DCI, and select/determine DCI corresponding to a PDSCH of the last in the indices (a TCI state in the DCI may be used in indication/update). The specific parameter corresponding to the DCI described above may be used as the specific parameter corresponding to each PDSCH. In indexing, a priority order for a plurality of specific parameters may be defined. The priority order for the specific parameters for the indexing of the DCI described above may be used as the priority order for the specific parameters for the indexing of the PDSCHs.

The specific DCI may be at least one of the following DCI 1 to DCI 4.

### [DCI 1]

DCI 1 may be DCI format 1_1/1_2 with a TCI field and with DL assignment or may be, of such DCI format, a DCI format that meets at least one of the following Condition 1-1 to Condition 1-3.
[[Condition 1-1]] An HARQ for a PDSCH scheduled by the DCI is an ACK.
[[Condition 1-2]] An HARQ for a PDSCH scheduled by the DCI is a NACK.
[[Condition 1-3]] An HARQ for a PDSCH scheduled by the DCI is a DTX. The HARQ may be transmitted as a NACK.

### [DCI 2]

DCI 2 may be DCI format 1_1/1_2 with a TCI field and without any DL assignment or may be, of such DCI format, a DCI format that meets at least one of the following Condition 2-1 to Condition 2-3.
[[Condition 2-1]] An HARQ for a PDSCH scheduled by the DCI is an ACK.
[[Condition 2-2]] An HARQ for a PDSCH scheduled by the DCI is a NACK.
[[Condition 2-3]] An HARQ for a PDSCH scheduled by the DCI is a DTX. The HARQ may be transmitted as a NACK.

### [DCI 3]

DCI 3 may be one or more DCI formats that are each with a TCI field and that trigger/schedule SRSs/CSIs/PUSCHs.

### [DCI 4]

DCI 4 may be one or more DCI formats without any TCI field or may be, of such DCI formats, a DCI format that meets at least one of the following Condition 4-1 to Condition 4-4. DCI 4 may be a DCI format except DCI format 1_1/1_2 with a TCI field. For example, DCI 4 may be DCI format 1_0 and DCI format 1_1/1_2 without any TCI field.
[[Condition 4-1]] An HARQ for a PDSCH scheduled by the DCI is an ACK.
[[Condition 4-2]] An HARQ for a PDSCH scheduled by the DCI is a NACK.
[[Condition 4-3]] An HARQ for a PDSCH scheduled by the DCI is a DTX. The HARQ may be transmitted as a NACK.
[[Condition 4-4]] An SRS/CSI/PUSCH is transmitted with the DCI.

For example, the specific DCI may be DCI (at least one of DCI 1 that meets Condition 1-1, DCI 2 that meets Condition 2-1, DCI 3, and DCI 4 that meets Condition 4-1) corresponding to an ACK. This enhances the reliability of beam indication DCI.

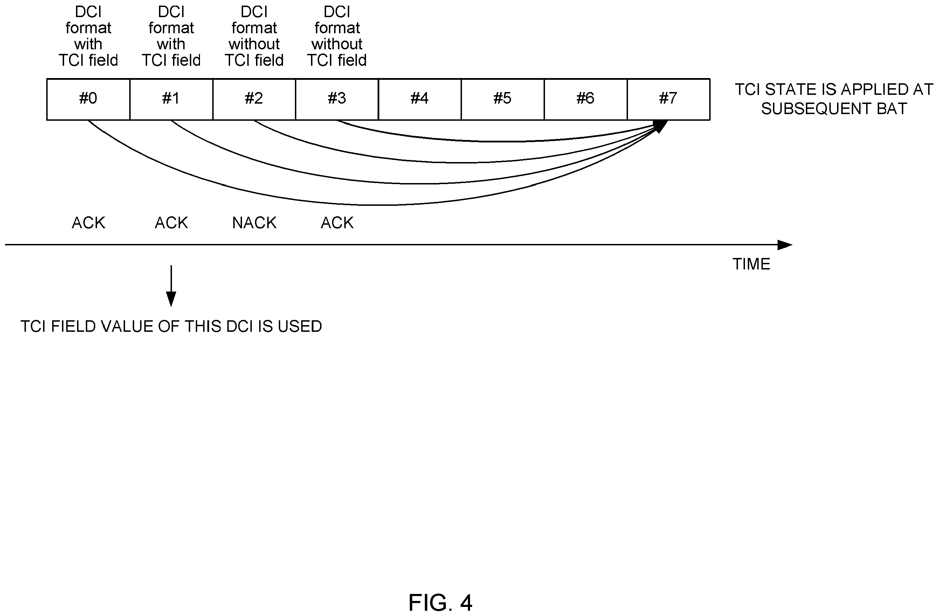

FIG. 4 shows an example where the specific DCI includes a TCI field and corresponds to an ACK (at least one of DCI 1 that meets Condition 1-1 and DCI 2 that meets Condition 2-1) and the specific parameter includes time. Slots #0 to #5 may be DL slots. Slots #6 to #7 may be UL slots. Four pieces of DCI in slots #0 to #3 may schedule respective four PDSCHs. In this example, a UE transmits, in slot #7, an HARQ-ACK codebook for DL in slots #0 to #3. In this example, the UE succeeds in decoding DCI with a TCI field in slot #0 (ACK), succeeds in detecting DCI with a TCI field in slot #1 (ACK), fails in decoding DCI without any TCI field in slot #2 (NACK), and succeeds in decoding DCI without any TCI field in slot #3 (ACK). In this case, the UE may determine/update a TCI state on the basis of the TCI field of the DCI in slot #1.

According to this embodiment, even when a plurality of pieces of DCI indicate beams, the UE is possible to appropriately determine DCI/beam.

### <Third Embodiment>

This embodiment relates to a TCI field in a DCI format (DCI format indicating a beam/TCI state) with the TCI field. In this embodiment, the second embodiment may not be applied.

When a UE transmits, on one PUSCH/PUCCH, a plurality of ACKs for a plurality of PDSCHs based on a plurality of pieces of specific DCI together, a base station may assume that every TCI field of the plurality of pieces of specific DCI (target DCI) indicates a common (same) value. When the base station receives, on one PUSCH/PUCCH, a plurality of ACKs for a plurality of PDSCHs based on a plurality of pieces of specific DCI together, every TCI field of the plurality of pieces of specific DCI may indicate a common (same) value.

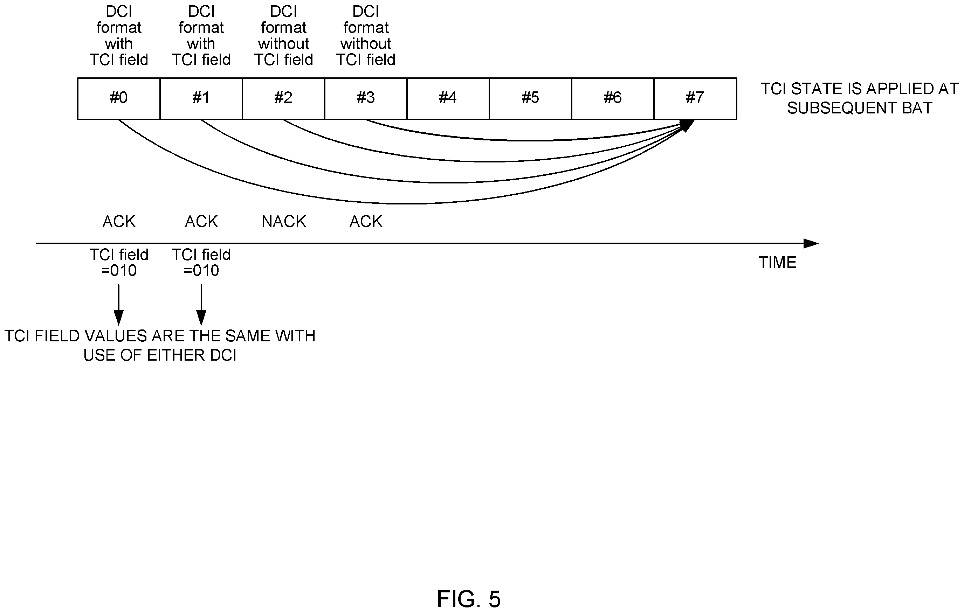

FIG. 5 shows an example where every TCI field of a plurality of pieces of specific DCI indicates the same value. Slots #0 to #5 may be DL slots. Slots #6 to #7 may be UL slots. Four pieces of DCI in slots #0 to #3 may schedule respective four PDSCHs. In this example, a UE transmits, in slot #7, an HARQ-ACK codebook for DL in slots #0 to #3. In this example, the UE succeeds in decoding DCI with a TCI field in slot #0 (ACK), succeeds in detecting DCI with a TCI field in slot #1 (ACK), fails in decoding DCI without any TCI field in slot #2 (NACK), and succeeds in decoding DCI without any TCI field in slot #3 (ACK). Every TCI field of the four pieces of DCI in slots #0 to #3 indicates the same value 010. In this case, the UE may determine/update a TCI state on the basis of a TCI field of any one of the pieces of DCI (slots #0 and #1) successfully decoded.

According to this embodiment, even when a plurality of pieces of DCI indicate beams, the UE is possible to appropriately determine DCI/beam.

### <Effects>

According to the second embodiment, as compared with the third embodiment, the base station is possible to flexibly perform a TCI indication. For example, the base station is possible to indicate TCI state #1 by DCI #1 and then update to TCI state #2 by different DCI #1. This allows delay in a beam indication to be reduced.

According to the third embodiment, as compared with the second embodiment, the UE's processing load is small. When the UE transmits, on a common PUCCH/PUSCH, HARQ-ACK information of both DCI #1 and subsequent DCI #2, it is not possible for the base station to indicate TCI state #1 by DCI #1 and then update to TCI state #2 by DCI #2. If such updating is performed, the base station cannot recognize that which TCI indication of DCI the UE follows for update the TCI state. Thus assumption of the TCI state may be different between the UE and the base station, so that the subsequent transmission/reception may not be appropriately performed (for example, beam failure may occur).

In the third embodiment, when the UE transmits, on a common PUCCH/PUSCH, a plurality of pieces of HARQ-ACK information, the base station does not update the TCI state until DCI corresponding to a different PUCCH/PUSCH transmission occasion is transmitted. The base station does not indicate a TCI state different from a TCI state indicated by certain DCI of a plurality of pieces of DCI corresponding to one PUCCH/PUSCH, in subsequent DCI of the plurality of pieces of DCI. The UE need not assume that a TCI state different from a TCI state indicated by certain DCI of a plurality of pieces of DCI corresponding to one PUCCH/PUSCH is indicated in subsequent DCI of the plurality of pieces of DCI.

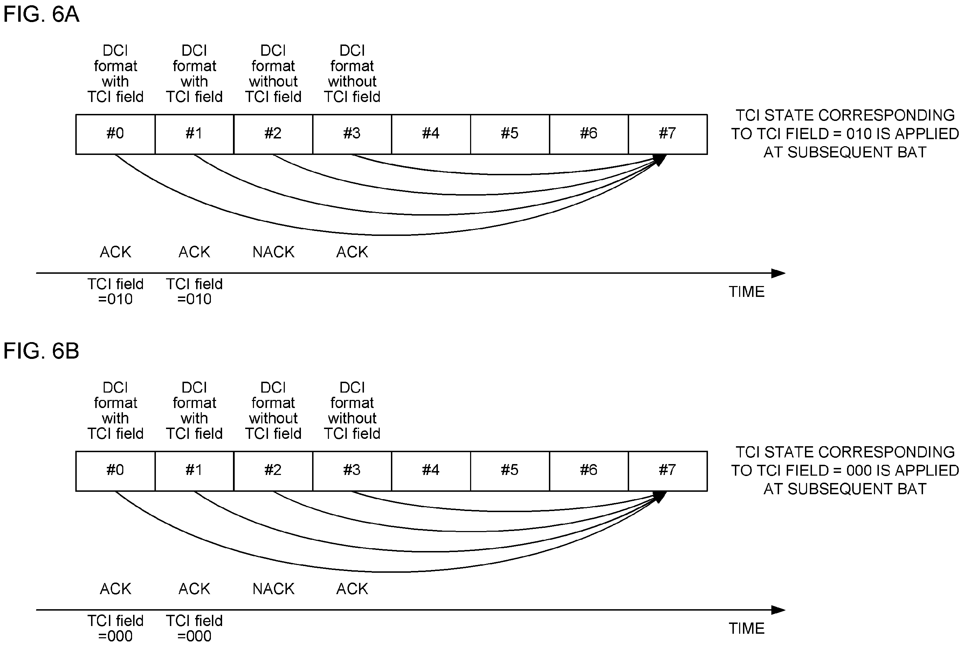

In an example of each of FIGS. 6A and 6B, slots #0 to #5 may be DL slots. Slots #6 to #7 may be UL slots. Four pieces of DCI in slots #0 to #3 may schedule respective four PDSCHs. A UE transmits, in slot #7, an HARQ-ACK codebook for DL in slots #0 to #3. In this example, the UE succeeds in decoding DCI with a TCI field in slot #0 (ACK), succeeds in detecting DCI with a TCI field in slot #1 (ACK), fails in decoding DCI without any TCI field in slot #2 (NACK), and succeeds in decoding DCI without any TCI field in slot #3 (ACK). In the example of FIG. 6A, a TCI field in DCI in slot #0 has a value of 010, and a TCI field in DCI in slot #1 has the same value of 010. The UE may apply the TCI field value 010 to a slot after at least Y symbols from the last symbol of transmission of the HARQ-ACK information in slot #7. In the example of FIG. 6B, a TCI field in DCI in slot #0 has a value of 000, and a TCI field in DCI in slot #1 has the same value of 000. The UE may apply the TCI field value 000 to a slot after at least Y symbols from the last symbol of transmission of the HARQ-ACK information in slot #7.

### <Fourth Embodiment>

This embodiment relates to operations for DCI not updating any TCI state.

When receiving DCI (specific DCI/target DCI) indicating an update of a TCI state, a UE may apply the TCI state at and after a specific timing based on the receiving. The specific timing may be a timing after Y symbols from reception of the DCI, may be after Y symbols from the last symbol of reception of the DCI, may be the first slot after at least Y symbols from the last symbol of reception of the DCI, may be the first slot after at least Y symbols from the last symbol of transmission of an ACK for the DCI, may be the first slot after at least Y symbols from the last symbol of transmission of an ACK/NACK for the DCI, or may be the first slot after at least Y symbols from the last symbol of a UL transmission for the target DCI.

When the UE receives a plurality of pieces of DCI indicating TCI states, the DCI does not always indicate a TCI state update. When certain DCI does not indicate any TCI state update, how the UE operates is a problem.

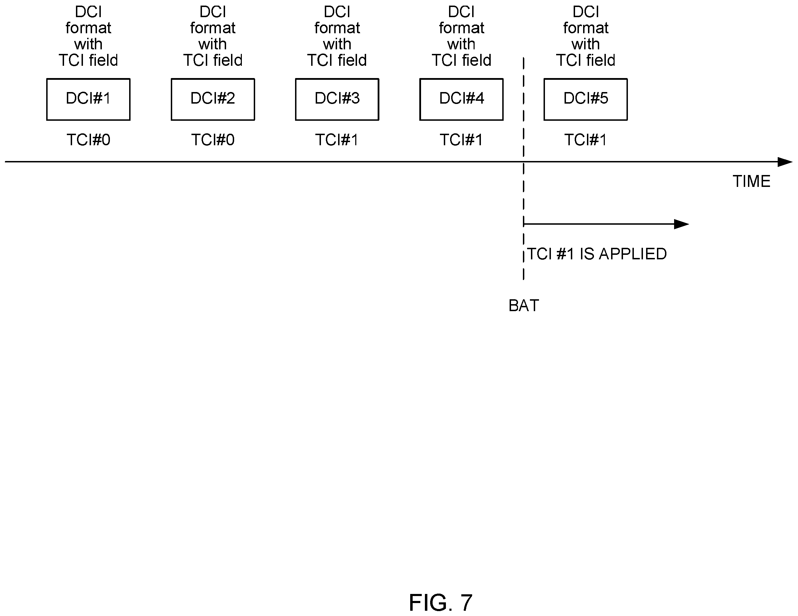

DCI not indicating any TCI state update (for example, DCI indicating a TCI state the same as a TCI state lastly indicated) may indicate the TCI state lastly indicated. In an example of FIG. 7, DCI #1 to DCI #5 are transmitted in the order of time. DCI #1, DCI #2, DCI #3, DCI #4, and DCI #5 indicate TCI #0, TCI #0, TCI #1, TCI #1, and TCI #1, respectively. In other words, DCI #3 indicates an update/change of the TCI state. The subsequent DCI #4 and DCI #5 may each indicate the changed TCI state. During a period from reception of DCI #3 to a specific timing, a current TCI state actually applied is different from a TCI state lastly indicated. Even when the UE fails in decoding DCI #3, the UE is possible to apply an appropriate TCI state as long as receiving the subsequent DCI.

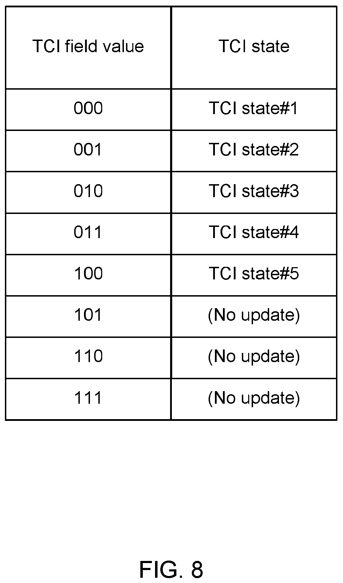

One or more codepoints of a TCI field may indicate that a TCI state is not changed/updated. For example, when up to M TCI states are activated and M is smaller than the number of TCI states possible to be indicated by the TCI field (the number of candidates, for example, when the TCI field size is three bits, the number of TCI states is eight), a specific codepoint may mean "no change" (a reserved value, an unapplicable value, an invalid value, a value not of TCI state ID, a value out of range). FIG. 8 shows an example of association between codepoints (values) of a TCI field and TCI states. In this example, M is five, and five codepoints 000 to 100 are associated with TCI states #1 to #5. The rest three codepoints 101 to 111 each mean "no change (No update)".

According to this embodiment, even when DCI does not update any TCI state, the UE is possible to apply an appropriate TCI state.

### <Other Embodiments>

### <<UE Capability Information/Higher Layer Parameter»

A higher layer parameter (RRC IE)/UE capability corresponding to a function (characteristic, feature) in the embodiments described above may be defined. The higher layer parameter may indicate whether to enable the function. The UE capability may indicate whether the UE supports the function.

A UE configured with a higher layer parameter corresponding to a function may perform the function. "A UE not configured with a higher layer parameter corresponding to the function does not perform the function (for example, conforms to Rel. 15/16)" may be defined.

A UE having reported/transmitted a UE capability indicating the support for the function may perform the function. "A UE having not reported a UE capability indicating the support of the function does not perform the function (for example, conforms to Rel. 15/16)" may be defined.

When the UE reports/transmits the UE capability indicating support of the function and is configured with the higher layer parameter corresponding to the function, the UE may perform the function. "When the UE does not report/transmit the UE capability indicating the support of the function or is not configured with the higher layer parameter corresponding to the function, the UE does not perform the function (for example, conforms to Rel. 15/16)" may be defined.

Which embodiment/option/choice/function in the plurality of embodiments described above is to be used may be configured by a higher layer parameter, may be reported as a UE capability by a UE, may be defined in a specification, or may be determined by the UE capability reported and the configuration by the higher layer parameter.

The UE capability may indicate whether to support a function of at least one of the following.
- A unified TCI framework
- Either one or both of a joint TCI and a separate TCI
- Dynamic unified TCI state indication by DCI The DCI may include DCI format 1_1/1_2 with DL assignment or may include DCI format 1_1/1_2 without any DL assignment.

The UE capability may indicate a value of at least one of the following.
- The number (maximum number) of TCI states to be configured for each BWP/CC/band/UE
- The number (maximum number) of active TCI states for each BWP/CC/band/UE
- Y [symbols] for a BAT

According to the UE capability/higher layer parameter described above, the UE can implement the above functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

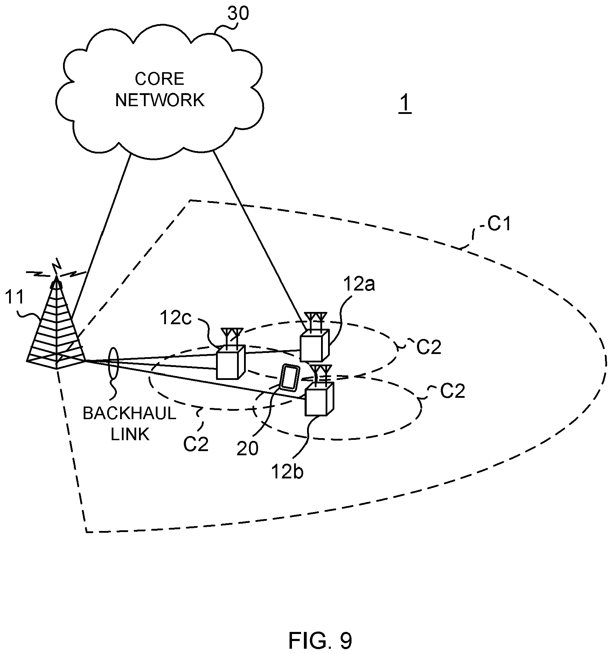

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

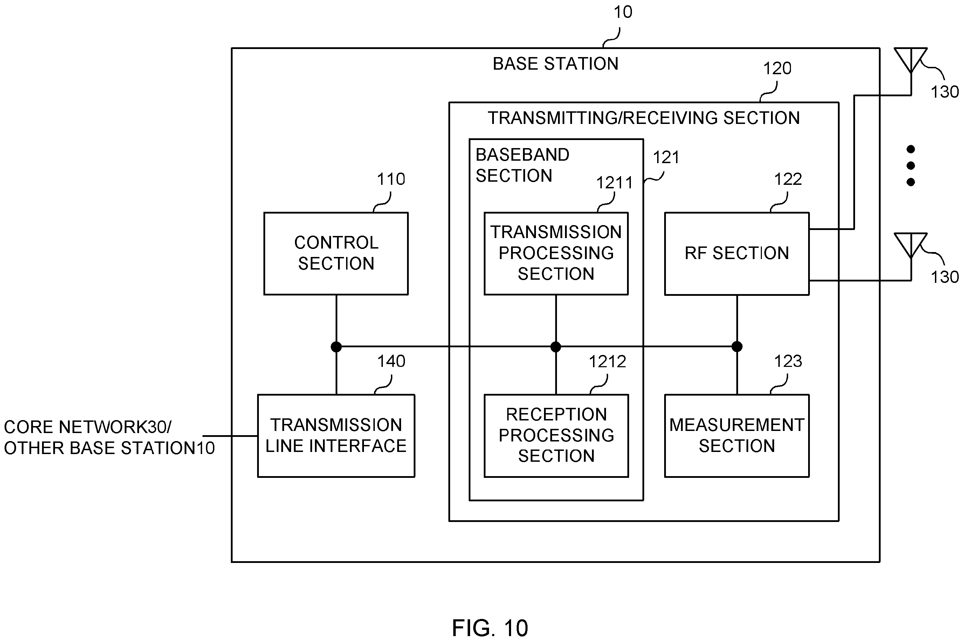

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a plurality of downlink control information formats, each of the plurality of downlink control information formats including a transmission configuration indication (TCI) state indication. The control section 110 may apply a TCI state indicated by one downlink control information format of the plurality of downlink control information formats, at a specific timing after transmission of the plurality of downlink control information formats.

### (User Terminal)

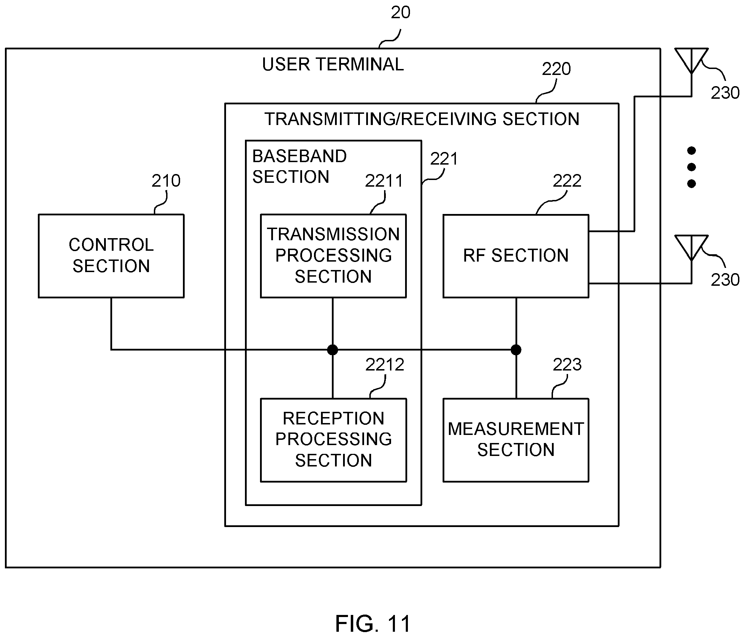

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a plurality of downlink control information formats (for example, specific DCI), each of the plurality of downlink control information formats including a transmission configuration indication (TCI) state indication. The control section 210 may apply a TCI state indicated by one downlink control information format (for example, target DCI) of the plurality of downlink control information formats, at a specific timing after reception of the plurality of downlink control information formats.

The plurality of downlink control information formats may indicate the same uplink transmission timing. Each of the plurality of downlink control information formats may be associated with a respective one of a plurality of indices. The one downlink control information format may correspond to the last index of the plurality of indices.

The plurality of downlink control information formats may correspond to an acknowledgement (ACK) at the uplink transmission timing.

The plurality of downlink control information formats may indicate the same uplink transmission timing. The plurality of downlink control information formats may indicate the same value of a TCI state.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

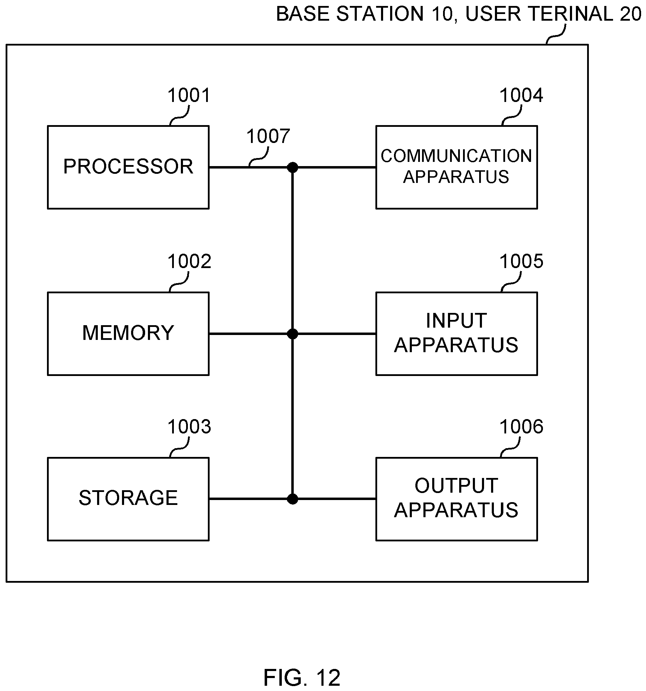

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. MAC signaling may be notified using, for example, MAC control elements (MAC CEs).

Notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms such as "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, and these are not restrictive. The moving object may be a moving object that autonomously travels based on a direction for moving.

The moving object may be a vehicle (for example, a car, an airplane, and the like), may be a moving object which moves unmanned (for example, a drone, an autonomous vehicle, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

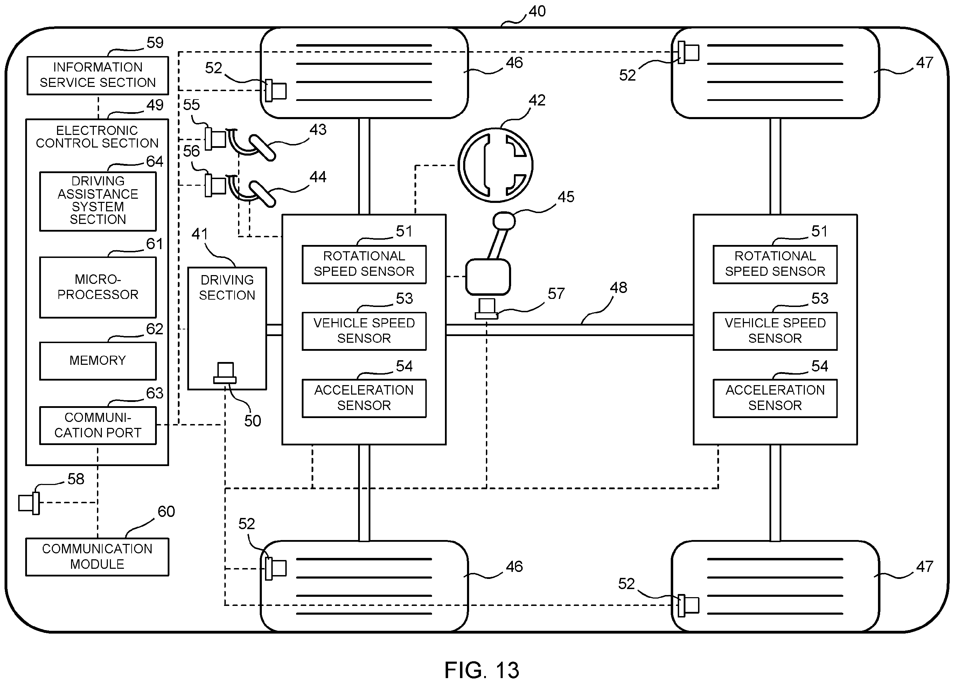

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, rotational speed sensors 51, pneumatic sensors 52, vehicle speed sensors 53, acceleration sensors 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, rotational speed signals of the front wheels 46/rear wheels 47 acquired by the rotational speed sensors 51, pneumatic signals of the front wheels 46/rear wheels 47 acquired by the pneumatic sensors 52, vehicle speed signals acquired by the vehicle speed sensors 53, acceleration signals acquired by the acceleration sensors 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments described in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, nextgeneration systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2021-166799 filed on October 11, 2021, the entire contents of which are incorporated herein by reference.

## Claims

1. A terminal comprising:
a receiving section that receives a plurality of downlink control information formats, each of the plurality of downlink control information formats including a transmission configuration indication (TCI) state indication; and
a control section that applies a TCI state indicated by one downlink control information format of the plurality of downlink control information formats, at a specific timing after reception of the plurality of downlink control information formats.

2. The terminal according to claim 1, wherein
the plurality of downlink control information formats indicate a same uplink transmission timing,
each of the plurality of downlink control information formats is associated with a respective one of a plurality of indices, and
the one downlink control information format corresponds to a last index of the plurality of indices.

3. The terminal according to claim 2, wherein
the plurality of downlink control information formats correspond to an acknowledgement (ACK) at the uplink transmission timing.

4. The terminal according to claim 1, wherein
the plurality of downlink control information formats indicate a same uplink transmission timing, and
the plurality of downlink control information formats indicate a same value of a TCI state.

5. A radio communication method for a terminal, the radio communication method comprising:
receiving a plurality of downlink control information formats, each of the plurality of downlink control information formats including a transmission configuration indication (TCI) state indication; and
applying a TCI state indicated by one downlink control information format of the plurality of downlink control information formats, at a specific timing after reception of the plurality of downlink control information formats.

6. A base station comprising:
a transmitting section that transmits a plurality of downlink control information formats, each of the plurality of downlink control information formats including a transmission configuration indication (TCI) state indication; and
a control section that applies a TCI state indicated by one downlink control information format of the plurality of downlink control information formats, at a specific timing after transmission of the plurality of downlink control information formats.
